Europäisches Patentamt

European Patent Office

Office européen des brevets

(19)

(11) Veröffentlichungsnummer: **0 121 921**
**B1**

(12) # EUROPÄISCHE PATENTSCHRIFT

(45) Veröffentlichungstag der Patentschrift:
26.02.86

(21) Anmeldenummer: 84103921.7

(22) Anmeldetag: 08.04.84

(51) Int. Cl.⁴: **B 65 G 23/44**

(54) **Vorrichtung zum Spannen eines bandförmigen Förderorgans.**

(30) Priorität: 12.04.83 DE 8310750 U

(43) Veröffentlichungstag der Anmeldung:
17.10.84 Patentblatt 84/42

(45) Bekanntmachung des Hinweises auf die Patenterteilung:
26.02.86 Patentblatt 86/9

(84) Benannte Vertragsstaaten:
AT BE CH DE FR GB IT LI LU NL SE

(56) Entgegenhaltungen:
AT - B - 297 583
CH - A - 561 146
DE - B - 1 805 101

(73) Patentinhaber: Geppert, Helmut, Niederfeld 12,
D-5162 Niederzier-Krauthausen (DE)

(72) Erfinder: Geppert, Helmut, Niederfeld 12,
D-5162 Niederzier-Krauthausen (DE)

(74) Vertreter: Kantner, Hans-Joachim, Dipl.-Ing. et al,
Darmstädter Strasse 8, D-6070 Langen (DE)

LIBER. STOCKHOLM 1986

## Beschreibung

Die Erfindung betrifft eine Vorrichtung zum Spannen eines über Umlenkwalzen laufenden, bandförmigen Förderorgans eines mit einem Rahmengestell versehenen Bandförderers, insbesondere eines Ein- oder Mehrbänder- oder Riemenförderers oder eines Scharnier- oder Plattenbands, mit einer mittels eines Getriebemotors antreibbaren Treibwalze, die mit außerhalb der Verbindungsebene der Achsen der beiden Umlenkwalzen liegender Achse auf einer rahmengestellseitigen Lagerungseinrichtung aufgenommen ist, mittels welcher der Abstand des Getriebemotors zu den Umlenkwalzen veränderbar ist.

Eine Vorrichtung dieser Art ist aus der CH-PS 561 146 bekannt. Bei dieser bekannten Anordnung besteht die Lagerungseinrichtung aus einem im unteren Teil des Rahmengestells in horizontaler Richtung verschiebbar angeordneten Schlitten, auf dem neben der Treibwalze auch der dieser zugeordnete, mittels eines Riemens oder einer Kette hiermit verbundene Motor aufgenommen ist. Diese bekannte Ausführung ergibt zwar einen großen Verstellbereich, erweist sich jedoch als nicht einfach und platzsparend genug. In diesem Zusammenhang ist davon auszugehen, daß in der Praxis in der Regel ein vergleichsweise kleiner Verstellbereich ausreicht, so daß sich der bei der Anordnung gemäß CH-PS 561 146 in Kauf zu nehmende bauliche Aufwand nicht lohnt. Ein weiterer Nachteil ist in dem hohen Raumbedarf im unteren Bereich des Rahmengestells zu sehen. Hierdurch sind die Einsatzmöglichkeiten der bekannten Anordnung auf Fälle beschränkt, in denen der Bandförderer ausreichend lichten Abstand von benachbarten Konstruktionselementen besitzt.

Hiervon ausgehend ist es daher die Aufgabe der vorliegenden Erfindung, unter Vermeidung der Nachteile der bekannten Anordnungen eine Vorrichtung eingangs erwähnter Art zu schaffen, die nicht nur konstruktiv möglichst einfach und platzsparend aufgebaut ist, sondern auch leicht, schnell und bequem betätigbar ist, und zwar unabhängig vom Betrieb des Fördermittels.

Diese Aufgabe wird erfindungsgemäß dadurch gelöst, daß die Achse der Treibwalze mit der Antriebswelle des einen Lagerflansch aufweisenden Getriebemotors direkt gekuppelt ist und daß die Lagerungseinrichtung im Bereich des Rahmengestells des Bandförderers vorgesehene Lagerschilde aufweist, denen gegenüber der Lagerflansch des Getriebemotors in zumindest einer Richtung verstellbar gehalten ist.

Diese Maßnahmen ergeben eine kompakte Baueinheit aus Treibwalze und Getriebemotor, die durch direkte Verschiebung gegenüber dem Rahmengestell eine Nachjustierung der Bandspannung ermöglicht. Die Lagerschilde können dabei in vorteilhafter Weise am Rahmengestell befestigt oder in noch weiter zu bevorzugender Weise einstückig hiermit ausgebildet sein, was sich positiv auf den baulichen Aufwand auswirkt. Ein besonderer Vorteil der erfindungsgemäßen Maßnahmen ist in der Erzielbarkeit einer hohen Justiergenauigkeit zu sehen. Infolge der direkten Verschiebung der aus Getriebemotor und Treibwalze bestehenden Baueinheit gegenüber dem Rahmengestell lassen sich nämlich durch Lagerspiel eines Verschiebeschlittens etc. hervorgerufene Ungenauigkeiten ausschließen.

Zweckmäßige Fortbildungen und vorteilhafte Ausgestaltungen der übergeordneten Maßnahmen sind in den Ansprüchen 2 bis 23 gekennzeichnet.

Im folgenden wird die Erfindung anhand einiger bevorzugter Ausführungsbeispiele, die in den Zeichnungen lediglich schematisch dargestellt sind, rein beispielsweise näher erläutert. Dabei zeigen:

Figur 1 in vergrößertem Maßstab eine Teildarstellung des umlenkwalzenseitigen Endes eines Bandförderers mit einer Ausführungsform der erfindungsgemäßen Spannvorrichtung,

Figur 2 in der Darstellung gemäß Figur 1 entsprechender Darstellung eine Teilansicht eines Bandförderers mit einer weiteren Ausführungsform einer erfindungsgemäßen Spannvorrichtung und

Figur 3 einen Axialschnitt durch die Anordnung ge-mäß Figur 1.

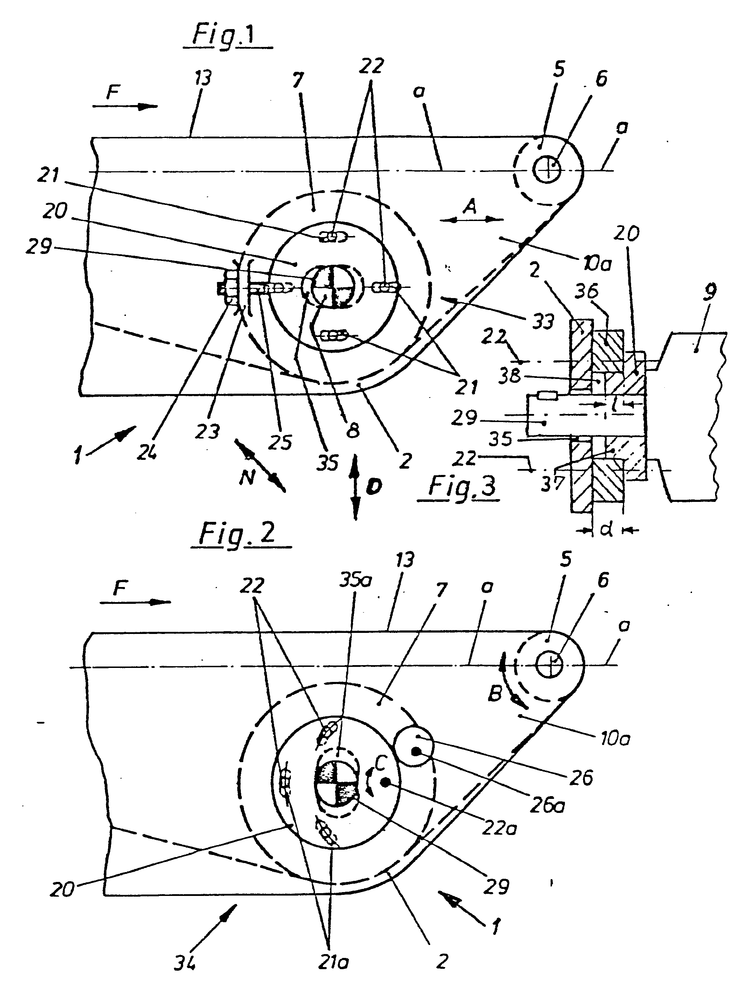

Der Aufbau und die Wirkungsweise eines Bandförderers sind an sich bekannt. Der den Zeichnungen zugrundeliegende Bandförderer 1 besteht aus einem Rahmengestell 2, auf dem zwei voneinander distanzierte Umlenkwalzen aufgenommen sind, über die ein Förderorgan 13, das als die gesamte Breite des Bandförderers abdeckendes, einziges Förderband oder aber in Form mehrerer Förderbänder oder Förderriemen ausgebildet sein kann, geführt ist. In den Figuren 1 und 2 ist lediglich eine Umlenkwalze 5 gezeichnet, deren Achse 6 mit der Achse der gegenüberliegenden Umlenkwalze in einer Ebene a liegt. Das Förderorgan 13 wird von einer teilweise hiervon umschlungenen Treibwalze 7 angetrieben, die mit ihrer Achse außer-halb der Ebene a zwischen den beiden Umlenkwalzen angeordnet ist und ihrerseits mittels eines in Figur 3 schematisch angedeuteten Getriebemotors 9 antreibbar ist. Der Getriebemotor 9 soll dabei direkt mit der Treibwalze 7 gekuppelt sein.

Zur Aufnahme der Treibwalze 7 samt direkt hiermit gekuppeltem Getriebemotor 9 ist eine als Ganzes mit 33 bzw. 34 bezeichnete Lagerungseinrichtung vorgesehen, die zwei im Bereich der beiden Längsseiten des Rahmengestells angeordnete, die Enden der Treibwalze 7 aufnehmende Lagerschilde 10a aufweist. Die Lagerschilde 10a können am Rahmengestell 2 befestigt oder in bevorzugter Weise, wie gezeichnet, einstückig hiermit ausgebildet sein.

Wie Figur 1 erkennen läßt, wird in höchst einfacher Weise die Anordnung der ohnehin vorhandenen Befestigungslöcher im Lagerflansch 20 des Getriebemotors 9 für die hier als Ganzes mit 33 bezeichnete Lagerungseinrichtung augenutzt, indem die beiden Lagerschilde 10a jeweils einerseits eine Ausnehmung in Form eines Langloches 35 aufweisen, das von der Achse der Treibwalze 7 oder aber der Abtriebswelle 29 des Getriebemotors 9 durchgriffen wird und eine Versatzbewegung derselben um ein vorbestimmtes Maß in der durch die Langlochausbildung vorgegebenen vorbestimmten Richtung, im dargestellten Ausführungsbeispiel in zur Förderrichtung F des Obertrums des Fördermittels 13 paralleler Richtung A, gestattet, und indem ferner in den beiden Lagerschilden 10a eine der Zahl der Löcher für Befestigungsschrauben im Lagerflansch 20 des Getriebemotors entsprechende Zahl von Langlöchern 21 gleicher Ausrichtung vorgesehen ist, die so angeordnet sind und eine solche Länge aufweisen, daß bei Anschlag der Achse der Treibwalze 7 bzw. der Abtriebswelle 29 des Getriebemotors in der einen oder anderen Endstellung der Ausnehmung bzw. des Langloches 35 im betreffenden Lagerschild 10a auch die durch die Langlöcher 21 jeweils hindurchgreifenden Führungsstifte sich in ihrer jeweiligen entsprechenden Anschlaglage am Ende dieser Langlöcher 21 befinden. Als Führungsstifte können insoweit zweckmäßig Schraubbolzen 22 dienen, welche in der gleichen Weise wie die üblichen Befestigungsschrauben für den Getriebemotor 9 durch die in Figur 1 nicht näher bezeichneten Löcher von dessen Lagerflansch 20 hindurchgesteckt werden und in die Langlöcher 21 im zugeordneten La-gerschild 10a eingreifen, um zwar mit dem Lagerschild 10a nicht unmittelbar verschraubt, sondern mittels einer Mutter mit Unterlegscheibe und gegebenenfalls Spannring festgezogen zu werden.

Es ist ersichtlich, daß durch diese Anordnung für den Fall eines direktg ekuppelten Getriebemotors 9 ohne jegliche Eingriffe oder Nacharbeiten an dessen Lagerflansch 20 eine konstruktiv höchst einfache und leicht, schnell und bequem betätigbare und dabei sehr watungsarme und doch höchst zuverlässige Möglichkeit geschaffen ist, die gewünschten Nachjustierungsarbeiten in bezug auf eine Anstellung der Achse der Treibwalze 7 bzw. der Abtriebswelle 29 des Getriebemotors 9 auch während des Förderbetriebes vornehmen zu können. Es brauchen nämlich lediglich die auch als Verdrehsicherung für den Getriebemotor dienenden Befestigungsschrauben 22 gelockert zu werden, um eine sauber geführte Verschiebebewegung der Achse der Treibwalze bzw. der Abtriebswelle 29 des Getriebemotors 9 im Langloch 35 des betreffenden Lagerschildes 10a zu ermöglichen. Die neugewählte Arbeitsstellung kann dann durch Festziehen der Befestigungsschrauben 22 höchst eifach und schnell fixiert werden.

Um auch bei dieser Ausführungsform eine feinfühlige stufenlose Verstellung durch formschlüssigen Kraftangriff zu ermöglichen, ist, wie aus Figur 1 ersichtlich, am Lagerschild 10a ein sich von dessen Oberfläche normal zu dieser wegerstreckender Stützflansch 23 vorgesehen. Konzentrisch zu einer Bohrung in diesem ist auf dessen einer Seite eine Mutter 24 aufgeschweißt, in deren Innengewinde eine Stellschraube 25 eingeschraubt ist, die sich mit ihrem mutterfernen Ende an einer Anschlagfläche des Lagerflansches 20 des Getriebemotors abstützt. Die Stellschraube 25 hätte auch in ein entsprechendes Innengewinde der Bohrung des Stützflansches 23 eingeschraubt sein können. Dies Würde jedoch in einer Vielzahl von Fällen einen vergleichsweise größeren Herstellungsaufwand bedingen. Ersichtlich wird durch Verdrehen der Stellschraube 25 formschlüssig die Arbeitsstellung des Lagerflansches 20 des Getriebemotors und damit auch der Abtriebswelle 29 desselben bestimmt und auch fixiert. In einem solchen Fall übernehmen die Befestigungsschrauben 22 eine zusätzliche Sicherungsfunktion für die Fixierung dieser Arbeitsstellung.

Beim Ausführungsbeispiel gemäß Figur 2 ist statt einer translatorischen Bewegung in Richtung A, wie bei der Ausführung gemäß Figur 1, eine Verschwenkbewegung als Nachstellbewegung für die Achse der Treibwalze 7 bzw. die Abtriebswelle 29 des Getriebemotors 9 vorgesehen. Auch hier allerdings soll ohne zusätzliche Maßnahmen bzw. Eingriffe am handelsüblich fest verfügbaren Getriebemotor 9 eine entsprechende Nachjustierungsverstellung ermöglicht werden. Zu diesem Zweck ist tn den im übrigen in gleicher Weise wie bei der Ausführung gemäß Figur 1 ausgebildeten und angeordneten Lagerschild 10a ein festes Durchgangsloch als Drehpunkt eingebracht, der dadurch ein Schwenklager für den Lagerflansch 20 des Getriebemotors definiert, daß durch eines von dessen Befestigungslöchern und dieses Durchgangsloch im Lagerschild 10a eine Befestigungsschraube 22a hindurchgesteckt wird. Konzentrisch zu diesem nicht näher bezeichneten Durchgangsloch im Lagerschild 10a sind in diesen einerseits eine Ausnehmung in Form eines kreisförmig gekrümmten Langloches 3S für die Aufnahme der Achse der Treibwalze 7 bzw. der Abtriebswelle 29 des Getriebemotors 9 und andererseits eine der Zahl der Befestigungsschrauben im Lagerflansch 20 des Getriebemotors 9 entsprechende Zahl von gleichfalls kreisbogenförmig gekrümmten Langlöchern 21a eingebracht, welche eine solche Länge aufweisen, daß jeweils dann, Wenn sich die Treibwalzenachse bzw. die Abtriebswelle 29 des Getriebemotors 9 in der einen oder anderen Anschlagstellung am Ende des bogenförmigen Langloches 35a des Lagerschildes 10a befindet, sich die weiteren nicht dem als Schwenklager dienenden Durchgangsloch im Lagerschild 10a entsprechenden Befestigungsschrauben 22 gleichfalls in ihrer entsprechenden Endstellung im zugeordneten kreisbogenförmigen Langloch 21a befinden.

Auf diese Weise wird ersichtlich eine als Ganzes mit 34 bezeichnete Lagerungseinrichtung geschaffen, welche eine Nachstellbewegung in Form einer Verschwenkung des Lagerflansches 20 des Getriebemotors 9 in Richtung des Doppelpfeiles C um die als Schwenklager dienende Befestigungsschraube 22a gestattet. Statt einer separat einführbaren Befestigungsschraube 22a kann als Schwenklager im Obrigen auch ein laderschildfester Schwenkbolzen zur Verwendung kommen.

Bei dem Ausführungsbeispiel gemäß Figur 2 ist für die zwangswelse stufenlose formschlüssige Veränderung der Arbeitsstellung des Lagerflansches 20 des Getriebemotors 9 und damit auch seiner Abtriebswelle 29 bzw. der mit dieser direktgekuppelten Achse der Treibwalze 7 eine Exzenterscheibe 26 vorgesehen, die bei 26a am Lagerschild 10a drehbar bzw. schwenkbar gelagert ist und sich in Anlage an einer Anschlagfläche am Lagerflansch 20 des Getriebemotors 9 befindet, die - wie dargestellt - auch eine Mantelfläche desselben sein kann. Statt einer Verstelleinrichtung mittels einer Exzenterscheibe 26 kann auch hier eine Verstellung mittels Stellschraube vorgesehen sein.

Obgleich bei den Ausführungen gemäß Figur 1 und 2 nicht dargestellt, kann bei diesen ein Kraftspeicher beispielsweise in Form eines entgegen der Richtung der Versatzbewegung wirkenden Federkraftspeichers für die Aufbringung einer unabhängig von den Förderbetriebsverhältnissen genau definierten Gegen- bzw. Rückstellkraft vorgesehen sein.

Es ist ersichtlich, daß die Ausführungen gemäß Figur und 2 nicht nur eine unmittelbare Verwendung eines handelsüblicheverfügbaren Getriebemotors 9 ohne Eingriffe oder Manipulationen an diesem möglich machen, sondern auch unabhängig davon sind, in welcher Stellung der mit der Achse der Treibwalze 7 direktgekuppelte Getriebemotor am Lagerschild 10 festgelegt wird, nämlich liegend oder hängend oder stehend oder in einer beliebigen geneigten Querlage, falls erwünscht. Hierdurch eröffnen sich beachtliche konstruktive Freiheiten ebenso wie Möglichkeiten der Ausnutzung verfügbaren Bauraums am Aufstellungsort. Allerdings ist zu bemerken, daß im Vergleich zur Ausführung gemäß Figur 2 die gemäß Figur 1 in den meisten Fällen zu bevorzugen sein dürfte, weil, abgesehen von Serienfertigungen, die Einbringung gerader Langlöcher 21 und 35 in die Lagerschilde IOa weniger aufwendig sein dürfte als die Einbringung von zu einem gemeinsamen Mittelpunkt konzentrisch gekrümmten Langlöchern 21a bzw. 35a.

Grundsätzlich kann gemäß einer zweckmäßigen Ausführungsform die Stellschraube 25 als einen am Lagerflansch 20 des Getriebemotors 9 angeordneten (nicht gezeigten) Mitnehmerstift mit einem an ihrem motorabtriebswellen: nahen Ende angeordneten Hältering umgreifende Augenschraube ausgebildet sein, die mit ihrem haltaringfernen freien Ende in ein Loch in einem sich von der Außenoberfläche des Lagerschildes 10 bzw. IOa für den Getriebemotor 9 wegerstreckenfest angeordneten Widerlagerflansch 23 eingreift oder dieses durchgreift und eine sich auf der motorabtriebswellennahen Seite desselben in Anlage an einer Druckfläche an diesem befindende Stellmutter aufweist.

Bevorzugt wird jedoch eine Ausführungsform gemäß einer anderen erfinderischen Fortbildung, nach der die Stellschraube als an einer Druckfläche auf der benachbarten Seite des Lagerflansches 20 des Getriebemotors 9, die mit Vorzug durch dessen Mantelfläche gebildet sein kann, mit seinem motorabtriebsewellennahen freien Ende in Anlage bringbarer Gewindestift ausgebildet ist, wobei dann zweckmäßig der Gewindestift 25 in einem Innengewinde eines Gewindeloches in einem sich von der Außenoberfläche des Lagerschildes für den Getriebemotor 9 wegerstreckend fest angeordneten Widerlagerflansch 23 geführt ist. Diese bevorzugte Ausführung gemäß diesem Erfindungsgedanken löst dabei gleichzeitig auch noch die folgenden sich der der Erfindung zugrundeliegenden üdergeordneten Aufgabe unterordnenden weiteren Aufgaben: Es kommt nicht selten vor, daß der Motor abgenommen werden muß, wie beispielsweise wegen Austausches desselben. Durch die vorstehend beschriebene bevorzugte Ausführungsform wird dabei gewährleistet, daß dieser oder sein Austauschmotor sofort wieder in der erforderlichen Spannstellung seine Arbeitslage einnimmt und sogleich wieder in dieser festgezogen werden kann. Sollten sich die Befestigungsschrauben des Getriebemotors 9 im Laufe des Betriebes einmal lockern, so wirkt die als Gewindestift ausgebildete Stellschraube 25 als weitere Sicherungsabstützung für die Spannstellung. Ferner ermöglicht diese bevorzugte Ausführung, nach Lösen der Befestigungsschrauben ohne weitere Komplikationen bezüglich der Demontage anderer Einzelteile den Getriebemotor sofort in Richtung seiner Antriebswellenachse vom Lagerschild 10 bzw. 10a abzuziehen.

Eine weitere erfinderische Fortbildung die in Figur 3 in einem Axialschnitt dargestellt ist, hat zur Aufgabe, einerseits die Flächenpressung, die durch die Befestigungsschrauben 22 auf den Lagerflansch 20 des Getriebemotors 9 aufgebracht wird, durch Vergrößerung der Anlagefläche zu verringern und unzulässige Biege- und/ oder Torsionsbelastungen des Lagerflansches 20 auszuschalten sowie eine von störenden Stufen freie Verschiebe- bzw. Verstellfläche auch dann zu gewährleisten, wenn der Lagerflansch des Getriebemotors 9 einen Zentrierflansch aufweisen sollte, so daß auch hier handelsüblich schnell und preisgünstig verfügbare Normteile beispielsweise in Form eines Getriebemotors in Normausführung Verwendung finden können. Dieser Erfindungsgedanke kennzeichnet sich dadurch, daß zwischen Lagerflansch 20 und Lagerschild 10 bzw. 10a des Getriebemotors 9 ein Distanzring 36 angeordnet ist, der eine den sich axial vom Lagerflansch 20 nach außen wegerstreckenden Zentrierflansch 37 aufnehmende Ausnehmung 38 und eine mindestens der axialen Länge dieses Zentrierflansches 37 entsprechende Dicke aufweist.

Abschließend ist noch zu bemerken, daß mit den gleichen vorteilhaften Wirkungen die Langlöcher 35 und 21 in Figur 1 auch eine Spannversatzbewegung in Richtung des Doppelpfeiles D quer zur Laufrichtung F des Bandförderers 1 oder in zu dieser geneigter Richtung ge-mäß dem Doppelpfeil N oder aber die kreisbogenförmigen Langlöcher 35a und 21a in Figur 2 eine Spannversatzbewegung um die Drehachse der Umlenkwalze 5 ermöglichend ausgeführt und angeordnet sein können.

## Patentansprüche

1. Vorrichtung zum Spannen eines über Umlenkwalzen (5) laufenden, bandförmigen Förderorganes (13) eines mit einem Rahmengestell (2) versehenen Bandförderers (1), insbesondere eines Ein- oder Mehrbänder- oder Riemenförderers oder eines Scharnier- oder Plattenbands, mit mindestens einer mittels eines Getriebemotors (9) antreibbren Treibwalz (7) die mit außerhalb der Verbindungsebene (a) der Achsen (6) der beiden Umlenkwalzen (5) liegender Achse (8) auf einer rahmengestellseitigen Lagerungseinrichtung (33, 36) aufgenommen ist, mittels welcher der Achsabstand des Getriebemotors (9) zu den Umlenkwalzen (5) veränderbar ist, dadurch gekennzeichnet, daß die Achse (8) der Treibwalze (7) mit der Abtriebswelle (29) des einen Lagerflansch (20) aufweisenden Getriebemotors (9) direkt gekuppelt ist und daß die Lägerungseinrichtung (33 bzw. 34) zwei im Bereich des Rahmengestells (2) des Bandförderers (1) vorgesehene Lagerschilde (l0a) aufweist, denen gegenüber der Lagerflansch (20) des Getriebemotors (9) in zumindest einer Richtung (A bzw. D bzw. N bzw. C) verstellbar ist.

2. Vorrichtung nach Anspruch 1, dadurch gekennzeichnet, daß die Lagerschilde (l0a) am Rahmengestell (2) des Bandförderers (1) befestigt sind.

3. Vorrichtung nach Anspruch 1, dadurch gekennzeichnet, daß die Lagerschilde (10a) mit dem Rahmengestell (2) des Bandförderers (1) einstückig ausgebildet sind.

4. Spannvorrichtung nach einem der vorhergehenden Ansprüche, dadurch gekennzeichnet, daß der Lagerflansch (20) des Getriebemotors (9) am zugeordneten Lagerschild (l0a) quer (D) zur Laufrichtung (F) des übertrums (l3) des Bandförderers (1) verschiebbar geführt ist.

5. Spannvorrichtung nach einem der vorhergehenden Ansprüche, dadurch gekennzeichnet, daß der Lagerflansch (20) des Getriebemotors (9) am zugeordneten Lagerschild (10a) in zur Laufrichtung (F) des Obertrums (13) des Bandförderers (1) paralleler Richtung (A) verschiebbar geführt ist.

6. Spannvorrichtung nach einem der vorhergehenden Ansprüche, dadurch gekennzeichnet, daß der Lagerflansch (20) des Getriebemotors (9) am zugeordneten Lagerschild (l0a) in zur Laufrichtung (F) des Obertrums (13) des Bandförderers (1) geneigter Richtung (N) verstellbar geführt ist.

7. Spannvorrichtung nach einem der vorhergehenden Ansprüche, dadurch gekennzeichnet, daß beide Lagerschilde (10a) jeweils eine Ausnehmung (35), welche eine Versatzbewegung der Abtriebswelle (29) des Getriebemotors (9) in einer vorbestimmten Richtung (A bzw. C) um ein vorbestimmtes Maß gestattet, und eine der Zahl der den Lagerflansch (20) des Getriebemotors (9) durchgreifenden Befestigungsschrauben entsprechende Zahl von in der vorbestimmten Richtung (A bzw. C) verlaufenden Langlöchern (21) von mindestens dem vorbestimmten Maß der Versatzbewegung der Abtriebswelle (29) des Getriebemotors (9) entsprechender Länge aufweisen, die von den Befestigungsschrauben (22) gleichfalls durchgriffen werden.

8. Spannvorrichtung nach einem der vorhergehenden Ansprüche, dadurch gekennzeichnet, daß der Lagerflansch (20) des Getriebemotors (9) am zugeordneten Lagerschild (l0a) relativ zum Obertrum (13) des Bandförderers (1) verschwenkbar ist.

9. Spannvorrichtung nach Anspruch 8, dadurch gekennzeichnet, daß beide Lagerschilde (10a) jeweils eine Ausnehmung (35a), welche eine Versatzbewegung der Abtriebswelle (29) des Getriebemotors (9) in zwei vorbestimmte Richtungen (C) um jeweils ein vorbestimmtes Maß gestattet, und ein lagerschildfestes Schwenklager (22a) für Verschwenkung des Lagerflansches (20) des Getriebemotors (9) gegenüber dem Lagerschild (l0a) sowie eine der um eins verminderten Zahl der den Lagerflansch (20) des Getriebemotors (9) durchgreifenden Befestigungsschrauben entsprechende Zahl von im Abstand der übrigen Löcher für Befestigungsschrauben im Lagerflansch (20) des Getriebemotors (9) zu einem solchen Loch angeordneten und zum Schwenklager (22a) konzentrisch kreisbogenförmigen Langlöchern (21a) aufweisen, die von den Befestigungsschrauben (22) gleichfalls durchgriffen werden.

10. Spannvorrichtung nach Anspruch 9, dadurch gekennzeichnet, daß das Schwenklager (22a) für den Lagerflansch (20) des Getriebemotors (9) durch einen sich normal vom Lagerschild (l0a) wegerstreckenden lagerschildfesten Schraubbolzen gebildet ist, der ein Loch des Lagerflansches (20) des Getriebemotors (9) durchgreift.

11. Spannvorrichtung nach Anspruch 9, dadurch gekennzeichnet, daß das Schwenklager (22a) für den Lagerflansch (20) des Getriebemotors (9) durch ein Loch im Lagerschild (l0a) gebildet ist, das von einem ein Loch im Lagerflansch (20) des Getriebemotors (9) durchgreifenden Schraubbolzen (22a) durchgriffen wird.

12. Spannvorrichtung nach einem der vorhergehenden Ansprüche, dadurch gekennzeichnet, daß der Lagerflansch (20) des Getriebemotors (9) jeweils gegen Federkraftwirkung verstellbar ist.

13. Spannvorrichtung nach einem der vorhergehenden Ansprüche, dadurch gekennzeichnet, daß der Lagerflansch (20) des Getriebemotors (9) stufenlos mittels einer rahmengestellfest oder lagerschildfest gelagerten Exzenterkurve (26) verstellbar ist.

14. Spannvorrichtung nach einem der vorhergehenden Ansprüche, dadurch gekennzeichnet, daß der Lagerflansch (20) des Getriebemotors (9) stufenlos mittels einer rahmengestellfest oder lagerschildfest gelagerten Stellschraube (25) verstellbar ist.

15. Spannvorrichtung nach Anspruch 14, dadurch gekennzeichnet, daß der bzw. die Lagerschild(e) (10 bzw. 10a) jeweils einen sich von seiner bzw. ihrer Aussenoberfläche wegerstreckend fest angeordneten Stützflansch (16 bzw. 23) aufweisen, gegenüber dem sich eine andererseits gegenüber dem Rahmengestell (2) des Bandförderers (1) bzw. dem Lagerflansch (20) des Getriebemotors (9) abstützende Stellschraube (17 bzw. 25) abstützt.

16. Spannvorrichtung nach Anspruch 14, dadurch gekennzeichnet, daß die Stellschraube (17 bzw. 25) in einem Gewinde des Stützflansches (16 bzw. 23) des Lagerschildes (10 bzw. 10a) geführt ist und sich gegenüber einer Anschlagfläche am Rahmengestell (2) des Bandförderers (1) bzw. am Lagerflansch (20) des Getriebemotors (9) abstützt.

17. Spannvorrichtung nach Anspruch 14, dadurch gekennzeichnet, daß die Stellschraube (17 bzw. 25) in einem am Rahmengestell (2) des Bandförderer (1) bzw. am Lagerflansch (20) des Getriebemotors (9) vorgesehenen Gewinde geführt ist und sich, vorzugsweise eine Bohrung im Stützflansch (16 bzw. 23) des Lagerschildes (10 bcw. 10a) durchgreifend, an einer Anschlagfläche desselben abstützt.

18. Spannvorrichtung nach Anspruch 16 oder 17, dadurch gekennzeichnet, daß das Gewinde durch das Innengewinde einer am Stützflansch (16 bzw, 23) des Lagerschildes (10 bzw. l0a) oder am Rahmengestell (2) des Bandförderers (1) bzw. am Lagerflansch (20) des Getriebemotors (9) konzentrisch zu einer Bohrung in diesem angeschweißten Mutter (24) gebildet ist.

19. Vorrichtung nach einem der Ansprüche 14 bis 18, dadurch gekennzeichnet, daß die Stellschraube (25) als einen am Lagerflansch (20) des Getriebemotors (9) angeordneten Mitnehmerst-ift mit einem an ihrem motorabtriebswellennahen Ende angeordneten Haltering umgreifende Augenschraube ausgebildet ist.

20. Vorrichtung nach Anspruch 19, dadurch gekennzeichnet, daß die Augenschraube (25) mit ihrem halteringfernen freien Ende in ein Loch in einem sich von der Außen-fläche des Lagerschildes (10 bzw. l0a) für den Getriebemotor (9) wegerstreckend fest angeordneten Widerlagerflansch (23) eingreift oder dieses durchgreift und eine sich auf der motorabtriebswellennahen Seite desselben in Anlage an einer Druckfläche an diesem befindende Stellmutter aufweist.

21. Vorrichtung nach einem der Ansprüche 14 bis 18, dadurch gekennzeichnet, daß die Stellschraube (25) als an einer Druckfläche auf der benachbarten Seite des Lagerflansches (20) des Getriebemotors (9), vorzugsweise dessen Mantelfläche, mit seinem motorabtriebswellennahen freien Ende in Anlage bringbarer Gewindestift ausgebildet ist.

22. Vorrichtung nach Anspruch 21, dadurch gekennzeichnet, daß der Gewindestift (25) in einem Innengewinde eines Gewindeloches in einem sich von der Außenoberfläche des Lagerschildes (10 bzw. 10a) für den Getriebemotor (9) wegerstreckend fest angeordneten Widerlagerflansch (23) geführt ist.

23. Vorrichtung nach einem der Ansprüche 17 bis 22, dadurch gekennzeichnet, daß zwischen Lagerflanscn (20) und Lagerschild (10 bzw. l0a) des Getriebemotors (9) ein Distanzring (36) angeordnet ist, der eine den sich axial vom Lagerflansch (20) nach außen wegerstreckenden Zentrierflansch (37) aufnehmende Ausnehmung (38) und eine mindestens der axialen Länge dieses Zentrierflansches (37) entsprechende Dicke aufweist.

## Claims

1. Device for tensioning a band shaped conveying organ (13) of a band conveyor (1) provided with a frame (2) running over guide rollers (5), in particular of a single or multiple band or belt conveyor or of a hinged or plate load supporting element conveyor, with at least one driving roller (7) which can be driven by means of a gear motor (9), which is held with axle (8) lying outside the connection plane (a) of the axles (6) of the two guide rollers (5) on a support device on the frame side, by means of which the center distance of the gear motor (9) to the guide rollers (5) can be changed, characterized in that the axle (8) of the driving roller (7) is directly coupled with the output shaft (29) of the gear motor (9) possessing a bearing flange (20) and that the support device (33 or 34) possesses two bearing plates (10 a) provided in the area of the frame (2) of the band conveyor (1), in relation to which the bearing flange (20) of the gear motor (9) is adjustable in at least one direction (A or D or N or C respectively).

2. Device according to Claim 1, characterized in that the bearing plates (10a) are fastened to the frame (2) of the band conveyor (1).

3. Device according to Claim 1, characterized in that the bearing plates (10a) are formed as one part of the frame (2) of the band conveyor (1).

4. Tensioning device according to one of the preceding Claims, characterized in that the bearing flange (20) of the gear motor (9) is supported at the associated bearing plate (10a) adjustable transversely (D) to the direction of running (F) of the upper strand (13) of the band conveyor (1).

5. Tensioning device according to one of the preceding Claims, characterized in that the bearing flange (20) of the gear motor (9) is supported at the associated bearing plate (10a) adjustable in a direction (A) parallel to the direction of running (F) of the upper strand (13) of the band conveyor (1).

6. Tensioning device according to one of the preceding Claims, characterized in that the bearing flange (20) of the gear motor (9) is supported at the associated bearing plate (10a) in a direction (N) inclined to the direction of running (F) of the upper strand (13) of the band conveyor (1).

7. Tensioning device according to one of the preceding Claims, characterized in that both bearing plates (IOa) possess in each case a recess (35), which permits an offset movement of the output shaft (29) of the gear motor (9) in a predetermined direction (A or C respectively) by a predetermined amount, and a number of slotted holes (21) of at least the length corresponding to the predetermined size of the offset movement of the output shaft (29) of the gear motor (9) corresponding to the number of the fastening bolts reaching through the bering. flange (20) of the gear motor (9), which slotted holes are also reached through by the fasteningbolts (22).

8. Tensioning device according to one of the preceding Claims, characterized in that the bearing flange (20) of the gear motor (9) can be swivelled at the associated bearing plate (IOa) relative to the upper strand (13) of the band conveyor (1).

9. Tensioning device according to Claim 8, characterized in that both bearing plates (IOa) possess in each case a recess (35a), which permits an offset movement of the output shaft (29) of the gear motor (9) in two predetermined directions (C) by in each case a predetermined amount, and a swivel bearing (22a) fixed to the bearing plate for swivelling the bearing flange (20) of the gear motor (9) in relation to the bearing plate (10a) as well as a number of circular arc-shaped slotted holes (21a) arranged at the distance of the other holes for fastening bolts in the bearing flange (20) of the gear motor (9) concentrically to such a hole and to the swivel bearing (22a) corresponding to the number reduced by one of the fastening bolts reaching through the bearing flange (20) of the gear motor (9), which slotted holes are also reached through by the fastening bolts (22).

10. Tensioning device according to Claim 9, characterized in that the swivel bearing (22a) for the bearing flange (20) of the gear motor (9) is formed by a screw bolt fixed to the bearing plate extending normally from the bearing plate (10a), which reaches through a hole in the bearing flange (20) of the gear motor (9).

11. Tensioning device according to Claim 9, characterized in that the swivel bearing (22a) for the bearing flange (20) of the gear motor (9) is formed by a hole in the bearing plate (10a), which is reached through by a screw bolt (22a) reaching through a hole in the bearing flange (20) of the gear motor (9).

12. Tensioning device according to one of the preceding Claims, characterized in that the bearing flange (20) of the gear motor (9) in each case is adjustable against spring force action.

13. Tensioning device according to one of the preceding Claims, characterized in that the bearing flange (20) of the gear motor (9) is adjustable continuously by means of eccentric cam (26) supported fixed to the frame or fixed to the bearing plate.

14. Tensioning device according to one of the preceding Claims, characterized in that the bearing flange (20) of the gear motor (9) is adjustable continuously by means of a set screw (25) supported fixed to the frame or fixed to the bearing plate.

15. Tensioning device according to Claim 14, characterized in that the bearing plate(s) (10 or IOa respectively) in each case possess a support flange (16 or 23 respectively) arranged fixed extending away from its or their outer surface, opposite which a set screw (17 or 25 respectively) bracing on the other hand against the frame (2) of the band conveyor (1) or the bearing flange (20) of the gear motor (9) respectively is braced.

16. Tensioning device according to Claim 14, characterized in that the set screw (17 or 25 respectively) is guided in a thread of the support flange (16 or 23 respectively) of the bearing plate (10 or 10a respectively) and is braced against a bearing surface at the frame (2) of the band conveyor (1) or at the bearing flange (20) of the gear motor (9) respectively.

17. Tensioning device according to Claim 14, characterized in that the set screw (17 or 25 respectively) is guided in a thread provided at the frame (2) of the band conveyor (1) or at the bearing flange (20) of the gear motor (9) respectively and is supported at a bearing surface of the bearing plate (10 or 10a respectively) preferably reaching through a hole in the support flange (16 or 23 respectively) of the bearing plate (10 or 10a respectively).

18. Tensioning device according to Claim 16 or 17, characterized in that the thread is formed by the internal thread of a nut (24) welded on concentrically to a hole in the support flange (16 or 23 respectively) of the bearing plate (10 or 10a respectively) or in the frame (2) of the band conveyor (1) or in the bearing flange (20) of the gear motor (9) respectively at the set support flange or frame or bearing flange respectively.

19. Device according to one of the Claims 14 to 18, underline characterized in that the set screw (25) is formed as eye-bolt embracing a carrier pin arranged at the bearing flange (20) of the gear motor (9) with a retainer ring arranged at its end close to the motor output shaft.

20. Device according to Claim 19, underline characterized in that the eye bolt (25) with its free end remote from the retainer ring engages in a hole in a support flange (23) arranged permanently extending away from the outer surface of the bearing plate (10 or 10a respectively) for the gear motor (9) or reaching through this and possesses a lock nut located on the side of the same close to the motor output shaft applied against a pressure surface at this.

21. Device according to one of the Claims 14 to 18, underline characterized in that the set screw (25) is formed as stud bolt which can be brought to bear against a pressure surface on the adjacent side of the bearing flange (20) of the gear motor (9), preferably of its sheath surface, with its free end close to the motor output shaft.

22. Device according to Claim 21, underline characterized in that the stud bolt (25) is guided in an internal thread of a threaded hole in a support flange (23) arranged permanently extending away from the outer surface of the bearing plate (10 or 10a respectively) for the gear motor (9).

23. Device according to one of the Claims 17 to 22, underline characterized in that a distance ring (36) is arranged between bearing flange (20) and bearing plate (10 or 10a respectively) of the gear motor (9), which distance ring possesses a recess (38) holding the centering flange (37) extending outwards from the bearing flange (20) and a thickness corresponding at least to the axial length of this centering flange (37).

**Revendications**

1. Dispositif pour la tension d'un element de convoyeur (13) en forme de bendes circulant sur rouleaux (5) de renvoi d'un convoyeur à bandes (1) pourvu d'un chassis (2), et plus particulièrement d'un convoyeur à bande simple ou multiple, ou d'un convoyeur à courroies, ou à charnières, ou à écailles, avec au moins un roulesu d'entrainement (7) entrainé par moto-reducteur (9), lequel rouleau d'entrsînement (7) par son axe (8) se trouvant en dehors du plan de jonction (a) des axes (6) des deux rouleaux (5) de renvoi porte sur un dispositif (33,34) d'appui latéral au chassis, grâce auquel l'entraxe entre le moto-reducteur (9) et les rouleaux (5) de renvoi peut être modifié, caractérisé en ce que l'axe (8) du rouleau d'entraînement (7) est accouplé directement avec l'arbre d'entraînement (29) du moteur d'entraînement (9) qui présente une bride de palier (20) et en ce que le dispositif d'appui (33 ou 34W) présente deux flasques (10a) prévues sur le chassis (2) du convoyeur à bande (1) par rapport auxquelles la bride de palier (20) du moto-réducteur (9) peut être reglée dens une direction au moins (A ou D ou N ou C).

2. Dispositif selon revendication 1, caractérisé en ce que les flasques (10a) sont fixées sur le chassis (2) du convoyeur *A bandes (1).

3. Dispositif selon revendication 1, caractérisé en ce que les flasques (10a) sont realisées en construction monobloc avec le chassis (2) du convoyeur à bandes (1).

4. Dispositif de serrage selon l'une des revendications précédentes, caractérisé par le fait que le bride de palier (20) du moto-reducteur (9) peut coulisser sur la flasque correspondante (10a) selon la diagonale (D) au sens de marche (F) de la partie supérieure (13) du convoyeur à bandes (1).

5. Dispositif de serrage selon l'une des revendications précédentes, caractérisé par le fait que le bride de palier (20) du moto-réducteur (9) peut coulisser sur la flasque correspondante (10a) dans un sens (A) parallàle au sens de marche (F) de la partie supérieure (13) du convoyeur à bandes (1).

6. Dispositif de serrage selon l'une des revendications précédentes, caractérisé par le fait que le bride de palier (20) du moto-réducteur (9) peut coulisser sur la flasque correspondante (10a) pour réglage, dans le sens (N) incliné par rapport au sens de la marche (F) de la partie supérieure (13) du convoyeur à bandes (1).

7. Dispositif de serrage selon l'une des revendications précédentes, caractérisé par le fait que les deux flasques (10a) présentent chacune un creux (35) qui autorise un mouvement de déplacement de l'arbre mené (29) du moto-réducteur (9) dans une direction prédéterminée (A ou C) selon une côté prédéterminée et un nombre de trous oblongs (21) suivant la direction prédéterminée (A ou C) correspondant au nombre des boulons de fixation qui traversent la bride (20) du moto-réducteur (9), et dont la longueur correspond au moins à la côté prédéterminée du déplacement de l'arbre mené (29) du moto-réducteur (9), les boulons de fixation (22) pénétrant également dans les creux.

8. Dispositif de serrage selon l'une des revendications précédentes, caractérisé par le fait que le bride de palier (20) du moto-réducteur (9) peut pivoter horizontalement sur la flasque correspondante (l0a) de la partie supérieure (13) du convoyeur à bandes (1).

9. Dispositif de serrage selon revendication 8, caractérisé par le fait que les deux flasques (10a) présentent chacune un creux (35a), qui permet un déplacement de l'arbre mené (29) du moto-réducteur (9) dans deux directions prédéterminées (C) d'une valeur prédéterminée et un palier pivotant (22a) fixé sur la flasque pour permettre le pivotement horizontal de la bride de palier (20) du moto-réducteur (9) par rapport à la flasque (10a) ainsi qu'un nombre correspondant au nombre des boulons de fixation pénétrans dans la bride (20) du moto-réducteur (9) diminué de un, de trous oblongs (21a) en arc de cercle, à distance des autres orifices pour les boulons de fixation dans la bride (20) du moto-réducteur (9) concentriquement à l'un de ces orifices et au palier pivotant (22a), dans lesquels pénétrent également les boulons de fixation (22).

10. Dispositif de serrage selon revendication 9, caractérisé par le fait que le palier pivotant (22) pour la bride de palier (20) du moto-réducteur (9) est formé par un boulon fileté intégral avec la flasque (10a) et s'écartant perpendiculairement de celle-ci, lequel boulon pénètre dans un orifice de la bride de palier (20) du moteur d'entraînement (9).

11. Dispositif de serrage, selon revendication 9, caractérisé par le fait que le palier pivotant (22a) de la bride de palier (20) du moto-réducteur (9) est constitué par un orifice dans la flasque (10a), dans lequel pénètre un boulon fileté (22a) traversant un orifice dans la bride de palier (20) du moto-réducteur (9).

12. Dispositif de serrage, selon l'une des revendications précédentes, caractérisé par le fait que le bride de paliers (20) du moto-réducteur (9) peut être réglées par rapport à une force élastique antagoniste.

13. Dispositif de serrage, selon l'une des revendications précédentes, caractérisé par le fait que les brides de palier (20) du moto-réducteur (9) peuvent avoir leur position réglée en continu au moyen d'une came d'excentrique (26) montée sur le chassis ou sur la flasque.

14. Dispositif de serrage, selon l'une des revendications précédent es, caractérisé par le fait que la position des brides de palier (20) du moto-réducteur (9) peut être réglée en continu au moyen d'une vis de réglage (25) montée sur le chassis ou sur la flasque.

15. Dispositif de serrage selon revendication 14, caractérisé par le fait que la ou les flasques (10 ou 10a) présentent chacune une bride d'appui (16 ou 23) montée sur leur surface extérieure, contre laquelle porte la vis de réglage (17 ou 25) dont l'autre extrémité porte sur le chassis (2) du convoyeur à bandes (1) ou sur la bride de palier (20) du moto-réducteur (9).

16. Dispositif de serrage selon revendication 14, caractérisé en ce que la vis de réglage (17 ou 25) pénètre dans un filetage de la bride d'appui (16 ou 23) de la flasque (10 ou 10a) et porte sur une surface de butée du chassis (2) du convoyeur (1) ou de la bride de palier (20) du moto-réducteur (9).

17. Dispositif de serrage selon revendication 14, caractérisé par le fait que la vis de réglage (17 ou 25) pénétre dans un filetage prévu sur le chassis (2) du convoyeur (1) ou sur la bride de palier (20) du moto-réducteur (9), et, de préférence traversant un alésage dans la bride de support (16 ou 23) de la flasque (10 ou 10a) porte sur une surface de butée de celle-ci.

18. Dispositif de serrage selon revendication 16 ou 17, caractérisé par le fait que le filetage est formé pàr le filetage interne, sur la bride de support (16 ou 23) de la flasque (10 ou 10a) ou sur le chassis (2) du convoyeur (1) ou encore sur la bride de palier (20) du moto-réducteur (9) d'un écrou (24) soudé concentriquement dans un alésage de ceux-ci.

19. Dispositif, selon l'une des revendications 14 à 18, caractérisé par le fait que la vis de réglage (25) est conformée comme un boulon à oeillet qui enveloppe une goupille d'entraînement disposée sur la bride de palier (20) du moto-réducteur (9) qui présente une bague de support à son extrémité la plus proche de l'arbre moteur.

20. Dispositif, selon revendication 19, caractérisé par le fait que le boulon à oeillet (25) penetre par son extrémité libre opposée à la bague support dans un orifice pratiqué dans une bride de butée (23) montée sur la face extérieure de la flasque (10 ou 10a) du mot-réducteur (9) ou traverse cet orifice, et présente un écrou de réglage dispose sur une surface d'appui sur le côté proche de l'arbre d'entraînement moteur.

21. Dispositif selon l'une des revendications 14 à 16, caractérisé par le fait que la vis de réglage (25) est sous forme de goupille filetée dont l'extrémité libre, proche du côté de l'arbre moteur peut être amenée sur une surface d'appui de la partie voisine de la bride de palier (20) du moto-réducteur (9) et de préférence sur sa surface latérale.

22. Dispositif selon revendication 21, caractérisé par le fait que la goupille filetée (25) pénètre dans le filetage intérieur d'un orifice fileté pratiqué dans une bride de contre-butée (23) s'écartant de la surface extérieure de la flasque (10 ou 10a) du moto-réducteur (9).

23. Dispositif selon l'une des revendications 17 à 22, caractérisé par le fait qu'une bague entretoise (36) est disposée entre la bride palier (20) et la flasque (10 ou 10a) du moto-réducteur (9), - laquelle présente une cavité (38) recevant une bride de centrage (37) se projettant axialement à partir de la bride de palier (20) vers l'extérieur, et une épaisseur correspondant au moins à la longueur axiale de cette bride de centrage (37).

0 121 921

Fig.1

Fig.2

Fig.3

1